# EUROPÄISCHE PATENTSCHRIFT

(11) **EP 2 326 815 B1**
(45) Veröffentlichungstag und Bekanntmachung des Hinweises auf die Patenterteilung: **28.01.2015**
(21) Anmeldenummer: 09775586.2
(22) Anmeldetag: 05.08.2009
(51) Int. Cl.: F02C 5/12, F23R 7/00, F02K 7/06

(54) **VERBRENNUNGSTURBINE MIT DISKONTINUIERLICHER VERBRENNUNG**
COMBUSTION TURBINE IN WHICH COMBUSTION IS INTERMITTENT
TURBINE À COMBUSTION DONT LA COMBUSTION EST DISCONTINUE

(30) Priorität: 26.08.2008 AT 13232008
(43) Veröffentlichungstag der Anmeldung: 01.06.2011
(73) Patentinhaber: Gabl, Helmut, 8046 Graz (AT); Lorenz, Edmund, 8452 Grossklein (AT); Niederl, Franz, 8430 Leibnitz (AT)
(72) Erfinder: Gabl, Helmut, 8046 Graz (AT); Lorenz, Edmund, 8452 Grossklein (AT); Niederl, Franz, 8430 Leibnitz (AT)
(74) Vertreter: Viering, Jentschura & Partner Patent- und Rechtsanwälte
(86) Internationale Anmeldenummer: PCT/AT2009/000301
(87) Internationale Veröffentlichungsnummer: WO 2010/022416

(56) Entgegenhaltungen:
- AT-B- 379 217
- DE-A1- 2 517 947
- US-A- 2 493 873
- US-B1- 6 370 864

## Beschreibung

Den Gegenstand dieser Erfindung bildet eine Verbrennungsturbine mit diskontinuierlicher Verbrennung, die zumindest eine mit Einlassventil(en) und einer Zündvorrichtung versehene Brennkammer aufweist. Dabei verfügt die zumindest eine Brennkammer abgasseitig über keinerlei Absperrvorrichtungen und ist somit abgasseitig immer offen. Stromab der zumindest einen Brennkammer ist eine Turbine angeordnet, die durch ein in der Brennkammer erhaltenes Arbeitsgas beaufschlagbar ist. Zwischen der Brennkammer und der Turbine ist axial hinter der Brennkammer eine Durchströmkammer angeordnet.

Den Gegenstand dieser Erfindung bildet auch ein Verfahren zum Betrieb einer Verbrennungsturbine.

Außerdem umfasst die Erfindung ein Antriebssystem für eine Maschine, die als Kernstück die erfindungsgemäße Verbrennungsturbine beinhaltet.

Bei herkömmlichen Turbinenmotoren nach dem Stand der Technik geht einerseits konstant Energie durch den notwendigen Verdichtungsprozess der Luft (Kompressorarbeit) vor der Zuführung in die Brennkammer verloren. Andererseits muss ununterbrochen Kraftstoff eingespritzt werden, um die Funktion und den Betrieb der Turbine sicherstellen zu können, auch wenn die Turbine nur im Schwachlastbetrieb betrieben wird. Dadurch bedingt ist ein hoher Energieverbrauch gekoppelt mit einer großen Umweltbelastung.

Kolbenmotoren ermöglichen eine diskontinuierliche Kraftstoffzufuhr. Unter ihnen erzeugt der Kreiskolbenmotor (Rotationskolbenmotor oder auch Wankel Motor) bereits direkt aus dem Verbrennungsvorgang eine Rotationsbewegung. Neben dem Vorteil einer diskontinuierlichen Kraftstoffzufuhr ergeben sich beim Kreiskolbenmotor weitere Vorteile gegenüber konventionellen Hubkolbenmotoren. Er hat ein geringeres Gewicht und weniger Bauteile, da Pleuelstangen und Kurbelwellen entfallen, er ist einfacher in der Motorsteuerung und er hat einen höheren Wirkungsgrad durch die geringeren Reibverluste an den Zylinderflächen. Trotzdem konnte sich dieser Verbrennungsmotor aufgrund der Dichtungsproblematik für die drei gasdichten Kammern und der exzentrischen Lagerung mit der Exzenterwelle am Markt nicht voll durchsetzen.

Es sind auch bereits Verbrennungsturbinen mit Brennkammern bekannt, die diskontinuierlich betrieben werden.

So beschreibt beispielsweise die Österreichische Patentschrift AT 311 735 eine Verbrennungsturbine mit diskontinuierlicher Verbrennung in mit Einlassventilen versehenen Brennkammern, in denen in periodischen Abständen Ladung, Verbrennung und Expansion des Treibmittels aufeinanderfolgen. Die Einlassventile werden dabei von einer Nockenwelle betätigt, die von einem Elektromotor angetrieben wird. Der Elektromotor wird dabei von in den Brennkammern vorgesehenen Temperatur- bzw. Druckfühlern elektronisch gesteuert. Durch eine Verbrennungsturbine werden die hohen Reibungsverluste, die bei Hubkolbenmotoren durch die Dichtungselemente auftreten und die durchschnittlich 15% bis 25% (im Teillastbetrieb sogar bis zu 40%) der Gesamtleistung betragen, vermieden. Eine zufriedenstellende Steuerung dieser Verbrennungsturbine konnte jedoch bisher nicht realisiert werden.

Die AT 379 217 offenbart eine ähnliche impulsgesteuerte Gasturbine, wobei durch eine Leitapparat-Laufrad-Kombination und ein gesteuertes Einlasssystem eine annähernd isochore Verbrennungscharakteristik gegeben ist. Das Einlasssystem umfasst dabei eine mit Öffnungen versehene, drehbare Ventilscheibe samt Antrieb und Steuerung. Ein gasdichtes Schließen der Ventilscheibe während des Verpuffungsprozesses konnte jedoch bisher technisch nicht verwirklicht werden. Außerdem ist der Aufbau dieser Verbrennungsturbine kompliziert und verwinkelt und führt in Folge zu Leistungsverlusten und zu hohen Fertigungskosten.

Die US 2,557,198 A offenbart eine Gasturbine mit diskontinuierlicher Verbrennung, wobei die Brennkammern jeweils Einlass- und Auslassventile aufweisen. Direkt nach der Brennkammer sind zwei Turbinen angeordnet, zwischen denen sich eine Kammer zum Ausgleich von Druckschwankungen befindet. Auch hier führt die Verwendung von Ventilscheiben zu Dichtungsproblemen während des Betriebes, außerdem ist die abgasseitig angeordnete Ventilscheibe sehr hohen Temperaturen ausgesetzt, vor allem hier sind Schwierigkeiten durch Abnutzung und Wärmeverzug zu erwarten.

Die DE 2 232 025 A1 offenbart eine Gasturbinenanlage, insbesondere ein Triebwerk mit Gleichraumverbrennung mit Verdichter welcher viel Verdichtungsenergie zieht und daher den Gesamtwirkungsgrad stark reduziert. Die mechanisch aufwendigen und störanfälligen Auslassschieber an der Brennkammer werden vermeiden. In einem speziellen Ausführungsbeispiel der DE 2 232 025 A1 ist der Brennkammerraum in einen Primärraum und einen Sekundärraum unterteilt, die durch eine Einschnürung voneinander getrennt sind. Die Einschnürung verursacht jedoch eine Rückströmung der Verbrennungsgase, dies führt zu einer ungleichen Raumfüllung in der Primär- und der Sekundärkammer.

Ein weiteres Ausführungsbeispiel der DE 2 232 025 A1 zeigt eine Verbrennungsturbine mit um die Turbine angeordneten Brennkammern, diese Anordnung führt zu hohen Lagertemperaturen der Turbine, die dadurch gekühlt werden müssen. Außerdem werden bei diesem Aufbau die Verbrennungsgase aus den Brennkammern um 180° umgelenkt, bevor sie auf eine Verdichterturbine treffen, diese Umlenkung führt zu einer ungleichmäßigen Turbinenanströmung und verursacht Leistungseinbußen.

Die DE 25 17 947 A1 offenbart ein Strahltriebwerk mit einer Brennkammer für pulsierende Verbrennung, d. h. ein Triebwerk, das nach dem Gleichraumverbrennungsverfahren in einem periodischen Arbeitsprozess arbeitet. Fig. 4 der DE 25 17 947 A1 offenbart dabei eine Ausführungsform, bei der ein Radialejektor, eine Druckausgleichskammer und eine Turbine am auslaßseitigen Ende der Brennkammer angeordnet sind.

Der Erfindung liegt daher die Aufgabe zugrunde, eine Verbrennungskraftmaschine zu offenbaren, die einen einfachen Aufbau aufweist und die kinetische Energie von Verbrennungsgasen direkt in eine drehende Bewegung umwandelt, ohne die oben genannten Nachteile von Turbinenmotoren oder Kolbenmotoren in Kauf nehmen zu müssen.

Diese Aufgabe wird durch eine Verbrennungsturbine mit diskontinuierlicher Verbrennung nach dem beigefügten Anspruch 1 gelöst. Dabei ist die Durchströmkammer von der zumindest einen Brennkammer durch eine Strömungsplatte, die als Lochplatte oder als Drallgitter ausgebildet ist, abgegrenzt.

Die Abgrenzung der Durchströmkammer von der zumindest einen Brennkammer durch eine Strömungsplatte führt zu einer Vergleichmäßigung der Arbeitsgasströmung.

Die axiale Anordnung der Durchströmkammer nach der zumindest einen Brennkammern hat den Vorteil, dass es in der Durchströmkammer ebenfalls zu einer Vergleichmäßigung der Arbeitsgasströmung kommt und dass keine Leistungsverluste durch eine Umlenkung der Arbeitsgasströmung auftreten. Die Verbrennungsturbine weist dadurch einen kompakten geradlinigen Aufbau auf.

Die erfindungsgemäße Verbrennungsturbine benötigt nur Einlassventile. Von der Verwendung von heißgasseitigen (abgasseitigen) Schiebern oder Ventilen mit ihren technischen Schwierigkeiten wird abgesehen. Jegliche Verlustleistungen, die für Arbeiten am Auslassventil bei konventionellen Ottomotoren oder Selbstzündern aufgebracht werden müssen, entfallen, da diese Ventile nicht notwendig sind. Ladungswechselverlust, die beim Ottomotor im Leerlauf bis zu 40% betragen, werden mit dem neuen Konzept vermieden. Es treten keine Verluste beim Ausschieben der Verbrennungsgase auf und es muss keine Expansionsarbeit zum Öffnen eines Auslassventils aufgewendet werden.

Weitere vorteilhafte Ausführungsformen sind Gegenstand der abhängigen Patentansprüche. Vorteilhafterweise weist die Durchströmkammer Ventilöffnungen auf, durch die vorzugsweise Luft, zuführbar ist. Der Durchströmkammer kann dadurch kurz vor einer Zündung in einer Brennkammer vorzugsweise kalte Luft zugeführt werden. Das nach der Zündung aus der Brennkammer strömende heiße Arbeitsgas schiebt dabei diese kalte Luft aus der Durchströmkammer durch die Turbine. Dadurch ergeben sich eine Leistungssteigerung und ein Kühleffekt für die Gasturbine.

Es ist sinnvoll, wenn die Durchströmkammer ein Sekundärzündsystem aufweist. Dadurch können nicht verbrannte Treibstoffanteile nachverbrannt werden. Die Durchströmkammer erfüllt dann auch die Aufgabe einer Nachbrennkammer. Somit ist es auch möglich, dass beispielsweise teerhaltige Treibstoffe zum Betrieb der Verbrennungsturbine verwendet werden können. Durch die hohen Temperaturen in den Brennkammern werden die teerhaltigen Inhaltsstoffe des Treibstoffs gekrackt und können dann in der Durchströmkammer verbrannt werden. Es ist auch denkbar, dass zusätzlich Treibstoff in die Durchströmkammer beispielsweise über eine Einspritzdüse eingespritzt wird. Dieser Treibstoff bewirkt eine Leistungssteigerung der Verbrennungsturbine (Boosterturbine). Er kann entweder durch das Sekundärzündsystem gezündet werden oder aber auch durch Selbstentzündung.

Es ist günstig, wenn die Strömungsplatte als Lochplatte ausgebildet ist, da es dadurch zu einer Vergleichmäßigung der Arbeitsgasströmung kommt.

In einer vorteilhaften Ausführungsform der Erfindung ist zwischen der Durchströmkammer und der Turbine ein Leitapparat zur Erzeugung einer Drallströmung angeordnet. Dadurch kann eine höhere Durchströmgeschwindigkeit des Arbeitsgases durch die Turbine und damit eine höhere Leistung erzielt werden. Die Turbine könnte dann auch bei gleicher Leistung kleiner gebaut werden. Ein weiterer wesentlicher Vorteil einer Drallströmung ist eine bessere akustische Entkopplung der Strömungsgeräusche und der Druckfluktuationen in den Brennkammern. Die Verhinderung von Druckfluktuationen durch Drallströmung führt zudem zu einer gleichmäßigeren Temperaturverteilung über den gesamten Strömungsquerschnitt und damit auch zu geringeren Maximaltemperaturen im Turbineneintritt.

Es ist auch sinnvoll, wenn bereits in der Durchströmkammer. Strömungsführungselemente zur Drallerzeugung angeordnet sind.

Sehr günstige Strömungsbedingungen in der Verbrennungsturbine ergeben sich auch, wenn die Durchströmkammer die Form einer Lavaldüse aufweist.

In einer weiteren vorteilhaften Ausführungsform der Erfindung weist die Verbrennungsturbine mehrere Brennkammern, vorzugsweise vier Brennkammern, auf. Die Brennkammern können dann einzeln oder gemeinsam in jedem beliebigen Leistungs- bzw. Teillastbereich von 0 bis 100% betrieben werden, was weitere wesentliche Energieeinsparungen mit verringertem NOx, CO, HC+NOx sowie CO₂ - Ausstoß zur Folge hat. Vorteilhafterweise sind die Brennkammern mit einer gemeinsamen Durchströmkammer verbunden.

Den Gegenstand dieser Erfindung bildet auch ein Verfahren zum Betrieb einer Verbrennungsturbine, bei dem Luft über Einlassventile zumindest einer Brennkammer zugeführt, mit einem Brennstoff gemischt und in der auslassseitig nicht verschlossenen Brennkammer verbrannt wird und anschließend mit dem so erhaltenen Arbeitsgas eine Turbine beaufschlagt wird. Das Arbeitsgas strömt dabei durch eine axial hinter der zumindest einen Brennkammer angeordneten Durchströmkammer, bevor damit die Turbine beaufschlag wird. Das Arbeitsgas aus der zumindest einen Brennkammer wird über eine Strömungsplatte, die als Lochplatte oder als Drallgitter ausgebildet ist, der Durchströmkammer zugeführt.

Diese Strömungsplatte führt neben der Durchströmkammer zu einer Vergleichmäßigung der Arbeitsgasströmung.

Vorteilhafterweise wird dem Arbeitsgas in der Durchströmkammer getaktet Luft zugeführt, die dann auch durch die Turbine geschoben wird und somit zu einer Leistungssteigerung bzw. zu einer Kühlung der Verbrennungsturbine führt.

Es ist günstig, wenn in der Durchströmkammer eine Nachverbrennung des Arbeitsgases durchgeführt wird. Es ist auch denkbar, dass der Durchströmkammer zusätzlich Treibstoff für eine Nachverbrennung zugeführt wird

In einer sehr vorteilhaften Ausgestaltung des Verfahrens wird das Arbeitsgas nach der zumindest einen Brennkammer in eine Drallströmung versetzt, bevor es der Turbine zugeführt wird. Dies führt zu einer höheren Turbinendrehzahl bzw. zu einer akustischen Entkoppelung der Brennkammer von der Turbine.

Die Erfindung umfasst auch ein Antriebssystem für Maschinen wie beispielsweise Fahrzeuge, Flugzeuge, Schiffe, Generatoren, Baumaschinen und Getriebe mit einer Verbrennungskraftmaschine, bei der es sich um eine Verbrennungsturbine nach einem der Ansprüche 1 bis 8 handelt.

Im Folgenden wird die Erfindung anhand von Zeichnungen beschrieben. Es zeigen:
Fig. 1 eine schematische Längsansicht einer erfindungsgemäßen Verbrennungsturbine;
Fig. 2 eine Ansicht des Brennkammerbereiches der erfindungsgemäßen Verbrennungsturbine;
Fig. 3 eine schematische Ansicht der Strömungsplatte;
Fig. 4 eine schematische Darstellung eines Antriebssystems für Fahrzeuge, welches mit der erfindungsgemäßen Verbrennungsturbine betrieben wird;

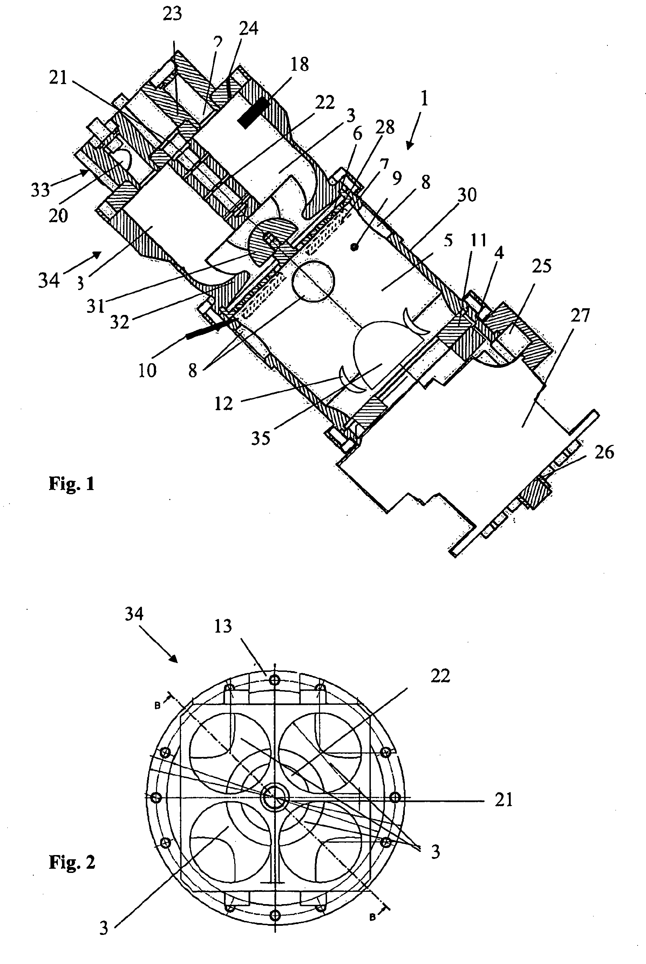

Figur 1 stellt einen Längsschnitt eines möglichen Ausführungsbeispieles der Erfindung dar. Die dargestellte Verbrennungsturbine 1 besteht im Wesentlichen aus einem Primärventilkopf 33, aus einem Brennkammerbereich 34, einer nachfolgenden Durchströmkammer 5, einer Turbine 4 und einer Antriebswelle 26 mit Lagergehäuse 27.

Der Primärventilkopf 33 ist mit dem Brennkammerbereich 34 dicht verbunden und er begrenzt die Oberseite der Brennkammern 3. Im Primärventilkopf 33 sind die Einlassventile 2, die in Ventilhaltern 23 geführt werden, angeordnet.

Der Brennkammerbereich 34 beinhaltet im vorliegenden Beispiel vier zylinderförmige Brennkammern 3, in die über eine Lufteintrittsöffnung 20 bzw. über die Einlassventile 2 Luft und über ein Treibstoffzufuhrsystem 24 Treibstoff zugeführt wird. Beim Treibstoffzufuhrsystem 24 kann es sich beispielsweise um eine oder mehrere Einspritzdüsen handeln (Einzel oder Reihe, z.B. mit Piezo - Injektoren).

Es ist auch denkbar, dass der Treibstoff bereits außerhalb der Brennkammern 3 der Luft zugemischt wird. Durch die Einlassventile 2 wird dann ein Treibstoff-Luft-Gemisch den Brennkammern 3 zugeführt.

Die Zuführung der Verbrennungsluft und des Treibstoffes in die Brennkammern 3 kann wie bei herkömmlichen Saugermotoren oder mittels konventionellen Einspritzsystemen und Düsenausformungen ausgestattet sein.

Innerhalb der vier Brennkammern 3 ist ein Startlüfterrohr 21 mit Startlüfteröffnungen 22 angeordnet.

In jeder Brennkammer 3 ist eine Zündvorrichtung 18 zur Zündung des Treibstoff-Luft-Gemisches vorgesehen. Bei der Zündvorrichtung 18 kann es sich um eine konventionelle Zündkerze aber auch um moderne Zündsysteme, wie beispielsweise eine Laserzündung, handeln.

Am Ende der Brennkammern 3 befindet sich eine Brennkammereinschnürung 32 bzw. ein halbkugelförmiger Strömungsteiler 31. Nach den Brennkammern 3 folgt eine Strömungsplatte 6, die im vorliegenden Beispiel als Lochplatte mit einzelnen Strömungsplattenöffnung 28 versehen ist. Die Strömungsplatte 6 führt zu einer Vergleichmäßigung der Arbeitsgasströmung. Zusätzlich zur Strömungsplatte 6 kann auch eine weitere Turbine 7 nach den Brennkammern 3 angeordnet sein. Die weitere Turbine 7 ist in Figur 1 durch strichpunktierte Linien angedeutet.

Zwischen den Brennkammern 3 und der Turbine 4 befindet sich die Durchströmkammer 5, die hier zylinderförmig ist und durch die Durchströmkammerwand 30 gebildet wird. Die Durchströmkammer 5 ist dabei axial hinter der Brennkammer 3 angeordnet, dies bedeutet, dass die Brennkammern 3 und die Durchströmkammer 5 im wesentlichen die gleiche Längsachse haben bzw. das die Längsachsen der Brennkammern 3 und die Längsachse der Durchströmkammer 5 parallel zueinander sind. Durch diese Bauweise strömt das Arbeitsgas aus den Brennkammern 3 ohne wesentliche Umlenkung bzw. Richtungsänderung in die Durchströmkammer 5. Die Durchströmkammer 5 weist Ventilöffnungen 8 auf, durch die zusätzlich Luft der Verbrennungsturbine 1 zugeführt wird. Über eine Einspritzdüse 10 der Durchströmkammer 5 kann optional Treibstoff für eine Nachverbrennung zugeführt werden. Die Durchströmkammer 5 kann auch ein Sekundärzündsystem 9 aufweisen. Ein Sekundärzündsystem 9 ist überflüssig, wenn die Temperatur des aus den Brennkammern 3 kommenden Arbeitsgases über der Selbstzündungstemperatur des zusätzlich eingespritzten Treibstoffes liegt. Der der Durchströmkammer 5 zugeführte Treibstoff kann andere Stoffeigenschaften z.B. eine andere Selbstzündungstemperatur aufweisen, wie der der Brennkammer 3 zugeführte Treibstoff. Der Treibstoff kann auch über die Ventilöffnungen (Einlassventile) 8 der Durchströmkammer 5 zugeführt werden. Selbstverständlich kann die Verbrennungsturbine auch ohne Nachverbrennung betrieben werden.

Zwischen der Durchströmkammer 5 und der Turbine 4 ist ein Leitapparat 11 angeordnet, der eine Drallströmung im Arbeitsgas erzeugt. Diesbezüglich können auch bereits in der Durchströmkammer 5 Strömungsführungselemente 12 angeordnet sein. Beim Leitapparat 11 kann es sich beispielsweise um ein Drallgitter handeln. Die Durchströmkammer 5 kann auch die Form einer Lavaldüse aufweisen (nicht dargestellt). Auch die Lavaldüse könnte das Arbeitsgas drallgeführt leiten.

Die Turbine 4 ist durch die Antriebswelle 26 im Lagergehäuse 27 gelagert, über die Antriebswelle 26 wird die Antriebsenergie nach Außen abgeführt. Es ist auch denkbar, dass die weitere Turbine 7 ebenfalls direkt mit der Antriebswelle 26 verbunden ist, wobei sich dann die Antriebswelle 26 durch die Durchströmkammer 5 erstreckt. Nach der Turbine 4 ist der Abgaskanal 25 zur Abgasabfuhr angeordnet.

Figur 2 zeigt eine Ansicht des Brennkammerbereiches 34. Deutlich erkennt man dabei das Startlüfterrohr 21 mit den seitlichen Startlüfteröffnungen 22. Der Brennkammerbereich 34 ist über den Verbindungsflansch 13 mit der Durchströmkammerwand 30 verbunden bzw. verschraubt.

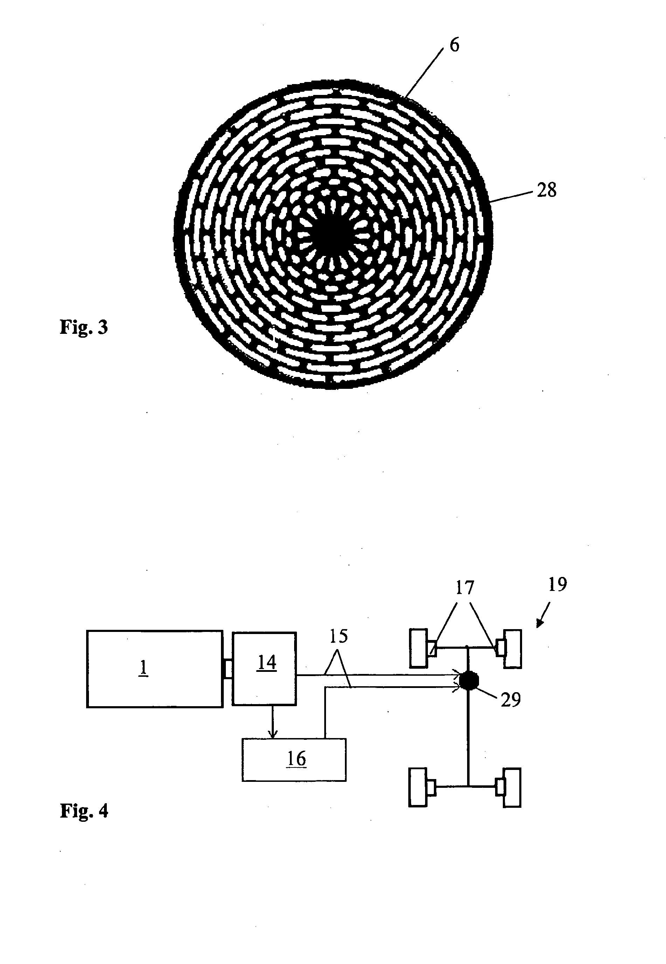

In Figur 3 ist die Strömungsplatte 6 mit den Strömungsplattenöffnungen 28 dargestellt. Diese Strömungsplattenöffnungen 28 sind im vorliegenden Beispiel schlitzförmig und parallelwandig, sie können aber auch kreisrund oder in beliebig anderen Formen ausgebildet sein. Die Durchtrittsöffnung kann brennstoffabhängig zylindrisch, konisch, lavalförmig etc. gestaltet werden. Es ist auch denkbar, dass in der Strömungsplatte 6 Strömungsleitelemente zur Erzeugung einer Drallströmung vorgesehen sind.

Im Folgenden wird das Funktionsprinzip der erfindungsgemäßen Verbrennungsturbine 1 beschrieben:
Für den Startvorgang der Verbrennungsturbine 1 wird bei geschlossenen Einlassventilen 2 vorverdichtete Luft oder Startgas über das Startlüfterrohr 21 und die Startlüfteröffnungen 22 in die Brennkammern 3 für den Verbrennungsprozess eingeleitet. Der Luft bzw. dem Startgas wird Treibstoff beigemengt und das Gemisch über die Zündvorrichtung 18 gezündet. Das expandierende Arbeitsgas versetzt dann die Turbine 4 in Drehung.

Alternativ kann zum Start die Turbine 4 bei geöffneten Einlassventilen 2 extern aktiviert werden. Die drehende Turbine 4 erzeugt dabei einen Unterdruck in den Brennkammern 3. Verbrennungsluft wird dadurch über die Einlassventile 2 angesaugt. Danach werden die Einlassventile 2 geschlossen, Treibstoff eingespritzt und das Gemisch sofort gezündet Das entstehende Arbeitsgas treibt dann die Turbine 4 an, wodurch die externe Aktivierung der Turbine 4 nicht mehr notwendig ist.

Im Normalbetrieb saugt die sich drehende Turbine 4 Verbrennungsluft über die geöffneten Einlassventile 2 in die Brennkammern 3. Die Verbrennungsluft kann optional mechanisch oder thermisch vorverdichtet werden.

Nach dem Schließen der Einlassventile 4 erfolgt das Einspritzen des Treibstoffes mit unmittelbarer Zündungsauslösung. Die Ventilansteuerung kann dabei über eine Nockenwelle oder über das Camless-Prinzip durchgeführt werden. Der Schließzeitpunkt des Einlassventils 2 und damit auch die Mengenströme, kann genau auf den Antriebsleistungsbedarf stöchiometrisch abgestimmt werden.

Die Zündung des Treibstoff-Luft-Gemisches bewirkt eine rasche Temperaturerhöhung. Da der Prozess mehr oder weniger isochor (V = konstant) geführt wird, ergibt sich aus der Gasgleichung eine unmittelbare Druckerhöhung. Das Arbeitsgas kann sich aber nur axial in Richtung Strömungsplatte 6 und die Durchströmkammer 5 zur Vergleichmäßigung ausdehnen, bis es schließlich auf die Turbine 4 trifft und dieser zusätzliche Rotationsenergie zuführt. Die Strömungsplatte 6 kann auch als Drallgitter ausgeführt sein. Über die Antriebswelle 26 wird die Leistung nach außen abgeleitet und externen Verbrauchern, wie beispielsweise einem Generator 14, zugeführt. Die konsequent angeordnete axiale Durchströmung der gesamten Maschine führt zu einem klaren und einfachen geometrischen Aufbau bei außerordentlich hohen Wirkungsgraden. Für einen weiteren Arbeitstakt wird dann wieder ein Einlassventil 2 oder mehrere Einlassventile 2 geöffnet und erneut Verbrennungsluft in die jeweilige Brennkammer 3 gesaugt bzw. gedrückt.

Zusätzlich zur Strömungsplatte 6 kann eine weitere Turbine 7 angeordnet sein. Diese weitere Turbine 7 kann entweder direkt mit der Antriebswelle 26 der Turbine 4 verbunden sein oder aber auch eine eigene Antriebswelle zur Energieauskoppelung aus der Verbrennungsturbine 1 aufweisen.

Wenn der Brennkammerbereich 34 mehrere Brennkammern 3 aufweist, so kann entweder nur eine oder aber auch mehrere Brennkammern 3 gleichzeitig oder in Sequenzfolgen betrieben werden, je nach gewünschter Leistungsabnahme. Dabei bieten singuläre Einspritzsysteme und Einzelzündungen den Vorteil, dass jede Brennkammer 3 auf den optimierten Verbrennungs- und Leistungsbedarf abgestimmt werden kann. Dies erfolgt beispielsweise durch eine gezielte Dosierung der Treibstoffmenge pro Brennkammer 3. Mit der neuen gegenständlichen Erfindung wird eine stöchiometrische Verbrennung in allen Lastbereichen sichergestellt. Dadurch ergibt sich eine optimale Brennstoffnutzung bei kleinen Abgaswerten. Laserzündsysteme, mittels derer die Zündtiefe in der Brennkammer 3 abgestimmt werden kann, bieten hierbei zusätzliche Vorteile.

Die variable Ventil- und Brennkammeranzahlsteuerung, einzeln oder in Kombination, ermöglicht auch eine optimale Gestaltung des Drehmomentverlaufs bei gleichzeitiger Verbrauchsreduzierung im Teillastbereich. Auf die Kolbenphasenlage braucht - wie bei Kolbenmotoren - keine Rücksicht genommen werden, da bei der dargestellten Erfindung keine Kolben vorhanden sind. Ebenso treten keine Rückströme von Restgasen bei der Brennkammerbefüllung auf.

Weiters liegt der Brennkammerdruck bei der Befüllung mehr oder weniger im Umgebungsdruckbereich. Damit kann der Druck, der zum Öffnen und Schließen des/der Einlassventils(e) 2 benötigt wird, um 60 bis 80% reduziert werden. Dies erweist sich besonders vorteilhaft bei elektromechanisch angesteuerten Einlassventilen 2 im Energieverbrauch, der Schnelligkeit (Linearverstellung) und der Genauigkeit in der Positionierung der Ventilstellung.

Die Steuerung der Zündung und des Einspritzvorganges erfolgt vorzugsweise elektronisch, kann aber auch elektrisch, mechanisch / hydraulisch oder aus Kombinationen genannter System verwirklicht sein. Es ist vorteilhaft wenn man zur Steuerung und Regelung der Einlassventile 2, des Treibstoffzufuhrsystems 24 und der Zündvorrichtung 18 Verbrennungskenngrößen, wie z.B. den CO₂ - Ausstoß, den Treibstoffverbrauch, die Verbrennungstemperaturen, den Atmosphärendruck, den Ladedruck, die Einspritzzeit, den Einspritzdruck, die Einspritzmenge, den Einspritzbeginn etc., verwendet. Diese Verbrennungskenngrößen lassen sich mit Sensoren erfassen.

In der Durchströmkammer 5 erfolgt eine Vergleichmäßigung der aus den Brennkammern kommenden Arbeitsgasströmung. Zusätzlich wird der Durchströmkammer 5 über die Ventilöffnungen 8 Luft, vorzugsweise kalte Luft zugeführt, und zwar kurz bevor ein Treibstoff-Luft-Gemisch in einer oder in mehreren Brennkammern 3 gezündet wird. Die Ventilöffnungen 8 werden kurz vor einer Zündung in den Brennkammern geschlossen. Das expandierende Arbeitsgas aus den Brennkammern 3 schiebt dann diese kalte Luft aus der Durchströmkammer 5 ebenfalls durch die Turbine 4. Im vorliegenden Beispiel wird in der Durchströmkammer 5 eine Nachverbrennung durchgeführt, dafür sind in der Durchströmkammer 5 ein Sekundärzündsystem 9 und eine oder mehrere Einspritzdüsen 10 vorgesehen.

Wenn das aus den Brennkammern 3 strömende Arbeitsgas eine Temperatur aufweist, die oberhalb der Selbstzündungstemperatur des in der Durchströmkammer 5 zugeführten Treibstoffes liegt, so kann in der Durchströmkammer 5 eine Nachverbrennung durchgeführt werden, ohne dass dafür das Sekundärzündsystem 9 notwendig wäre.

Durch die in der Durchströmkammer 5 eingebauten Strömungsführungselemente 12 bzw. durch den Leitapparat 11 wird in der Arbeitsgasströmung ein Drall erzeugt, der weitestgehend bis in den Turbineneintrittsbereich erhalten bleibt. Durch den Drall werden die Strömungsgeschwindigkeiten deutlich erhöht und dies bei verringertem Druckverlust.

Die Drallströmung aus der Durchströmkammer 5 kann in eine axiale und in eine radiale Anströmkomponente der Leitschaufeln des Leitapparates 11 oder falls ohne Leitschaufeln ausgeführt, des Laufrades der Turbine 4, zerlegt werden. Durch den Drehsinn des Dralles wird der Gasströmung eine in Richtung der Leitschaufeln des Leitapparates 11 geführte Umlenkung des Gases zugeführt.

In der Durchströmkammer 5 kann für die Strömungsführung ein Strömungsleitelement 35 angeordnet sein, das im vorliegenden Beispiel die Form einer Parabel aufweist. Es ist vorzugsweise im Endbereich der Durchströmkammer 5 positioniert. Es können auch die Brennräume 3 mit wirbel- oder drallerzeugenden Elementen ausgestattet sein.

Die Verbrennungsturbine 1 kann zur Kühlung von einem Wärmetauscher umgeben sein zum Beispiel in Form eines Doppelmantels. Dabei kann die Abwärme der Turbine für Heizzwecke verwendet werden. Es ist auch denkbar, dass die Lager für die Antriebswelle 26 ein Kühlsystem aufweisen.

Als Treibstoff für die Verbrennungsturbine 1 können alle am Markt verfügbaren flüssigen, gasförmigen und zündbaren Kohlenwasserstoffverbindungen (z.B. Benzine, Diesel inkl. Biovarianten, Methanol, Ethanol, andere Alkohole, Biogase, Faulgase, Erdgase, Kerosine, pulverisierter Kohlenstaub etc.) aber auch Wasserstoff verwendet werden. Sogar der Betrieb mit Holzgas oder anderen Biomassegasen ist denkbar. Dabei können einige Gasbestandteile in den Brennkammern 3 verbrannt werden, andere Bestandteile wie Teer oder weitere langkettige Kohlenwasserstoffverbindungen werden durch die hohen Temperaturen in der Brennkammer 3 in kurzkettige Kohlenwasserstoffverbindungen gespalten (gekrackt) und können danach in der Durchströmkammer 5 verbrannt werden. Somit wird eine aufwendige Gasreinigung überflüssig. Es kann auch zusätzlich Wasser in eine der Brennkammer 3 oder in die Durchströmkammer 5 eingedüst werden. Für eine weitere Leistungssteigerung kann Wasser auch dem Treibstoff beigemengt werden.

In Figur 4 ist beispielhaft ein Antriebssystem für ein Fahrzeug 19 dargestellt. Dabei treibt die erfindungsgemäße Verbrennungsturbine einen Generator 14 zu Stromerzeugung an. Der erzeugte elektrische Strom 15 kann dann direkt einem Fahrzeugantriebsmotor 17 zugeführt werden. Es ist aber auch denkbar, dass der elektrische Strom 15 zuvor einer Batterie 16 zugeführt wird. Die entsprechende Steuerung erfolgt über einen Fahrzeugregler 29. Die Verbrennungsturbine kann dabei kontinuierlich oder in Intervallen betrieben werden.

Die in den Zeichnungen dargestellten Ausführungsformen stellen lediglich eine bevorzugte Ausführung der Erfindung dar. Die Erfindung umfasst auch andere Ausführungsformen, bei denen beispielsweise anstatt der einen Durchströmkammer 6 mehrere Durchströmkammern 6 zur Vergleichmäßigung der Arbeitsgasströmung vorgesehen sind. Auch in diesen mehreren Durchströmkammern 6 könnte eine Nachverbrennung durchgeführt werden.

## Patentansprüche

1. Verbrennungsturbine mit diskontinuierlicher Verbrennung, die zumindest eine mit Einlassventilen (2) und einer Zündvorrichtung (18) versehene Brennkammer (3) aufweist, die zumindest eine Brennkammer (3) verfügt abgasseitig über keinerlei Absperrvorrichtungen und ist somit abgasseitig immer offen, wobei stromab der zumindest einen Brennkammer (3) eine Turbine (4) angeordnet ist, die durch ein in der Brennkammer (3) erhaltenes Arbeitsgas beaufschlagbar ist, wobei zwischen der zumindest einen Brennkammer (3) und der Turbine (4) axial hinter der zumindest einen Brennkammer (3) eine Durchströmkammer (5) angeordnet ist, **dadurch gekennzeichnet, dass** die Durchströmkammer (5) von der zumindest einen Brennkammer (3) durch eine Strömungsplatte (6) abgegrenzt ist, wobei die Strömungsplatte (6) als Lochplatte oder als Drallgitter ausgebildet ist.

2. Verbrennungsturbine nach Anspruch 1, **dadurch gekennzeichnet, dass** die Durchströmkammer (5) Ventilöffnungen (8) aufweist, durch die vorzugsweise Luft zuführbar ist.

3. Verbrennungsturbine nach Anspruch 1 oder 2, **dadurch gekennzeichnet, dass** die Durchströmkammer (5) ein Sekundärzündsystem (9) aufweist.

4. Verbrennungsturbine nach einem der Ansprüche 1 bis 3, **dadurch gekennzeichnet, dass** in der Durchströmkammer (5) zumindest eine Einspritzdüse (10) für die Zuführung eines Treibstoffs vorgesehen ist.

5. Verbrennungsturbine nach einem der Ansprüche 1 bis 4, **dadurch gekennzeichnet, dass** zwischen der Durchströmkammer (5) und der Turbine (4) ein Leitapparat (11) angeordnet ist.

6. Verbrennungsturbine nach einem der Ansprüche 1 bis 5, **dadurch gekennzeichnet, dass** in der Durchströmkammer (5) Strömungsführungselemente (12) zur Drallerzeugung angeordnet sind.

7. Verbrennungsturbine nach einem der Ansprüche 1 bis 6, **dadurch gekennzeichnet, dass** die Durchströmkammer (5) die Form einer Lavaldüse aufweist.

8. Verbrennungsturbine nach einem der Ansprüche 1 bis 7, **dadurch gekennzeichnet, dass** die Verbrennungsturbine (1) mehrere Brennkammern (3), vorzugsweise vier Brennkammern (3), aufweist, und dass diese Brennkammern (3) mit einer gemeinsamen Durchströmkammer (5) verbunden sind.

9. Verfahren zum Betrieb einer Verbrennungsturbine (1), bei dem Luft über Einlassventile (2) zumindest einer Brennkammer (3) zugeführt, mit einem Brennstoff gemischt und in der auslassseitig nicht verschlossenen Brennkammer (3) verbrannt wird und anschließend mit dem so erhaltenen Arbeitsgas eine Turbine (4) beaufschlagt wird, wobei das Arbeitsgas durch eine axial hinter der zumindest einen Brennkammer (3) angeordneten Durchströmkammer strömt, bevor damit die Turbine (4) beaufschlag wird, **dadurch gekennzeichnet, dass** das Arbeitsgas aus der zumindest einen Brennkammer (3) über eine Strömungsplatte (6), die als Lochplatte oder als Drallgitter ausgebildet ist, der Durchströmkammer (5) zugeführt wird.

10. Verfahren nach Anspruch 9, **dadurch gekennzeichnet, dass** dem Arbeitsgas in der Durchströmkammer (5) getaktet Luft zugeführt wird.

11. Verfahren nach einem der Ansprüche 9 oder 10, **dadurch gekennzeichnet, dass** in der Durchströmkammer (5) eine Nachverbrennung des Arbeitsgases durchgeführt wird.

12. Verfahren nach einem der Ansprüche 9 bis 11, **dadurch gekennzeichnet, dass** der Durchströmkammer (5) zusätzlich Treibstoff für eine Nachverbrennung zugeführt wird.

13. Verfahren nach einem der Ansprüche 9 bis 12, **dadurch gekennzeichnet, dass** das Arbeitsgas nach der zumindest einen Brennkammer (3) in eine Drallströmung versetzt wird, bevor es der Turbine (4) zugeführt wird.

14. Antriebssystem für eine Maschine, wie beispielsweise Fahrzeuge, Flugzeuge, Schiffe Generatoren, Baumaschinen und Getriebe, mit einer Verbrennungskraftmaschine, **dadurch gekennzeichnet, dass** die Verbrennungskraftmaschine eine Verbrennungsturbine (1) nach einem der Ansprüche 1 bis 8 ist.

## Claims

1. Combustion turbine with intermittent combustion comprising at least one combustion chamber (3) having inlet valves (2) and an ignition device (18), the at least one combustion chamber (3) having no shut-off devices on the off-gas side and thus being at all times open on the off-gas side, wherein a turbine (4) which can be impinged with a process gas obtained in the combustion chamber (3) is positioned downstream of the at least one combustion chamber (3), wherein a flow-through chamber (5) is positioned between the at least one combustion chamber (3) and the turbine (4) axially downstream of the at least one combustion chamber (3), **characterized in that** the flow-through chamber (5) is separated from the at least one combustion chamber (3) by a flow plate (6), the flow plate (6) being formed as a perforated plate or as a swirl grid.

2. Combustion turbine according to claim 1, **characterized in that** the flow-through chamber (5) comprises valve openings (8) through which preferably air can be fed.

3. Combustion turbine according to claim 1 or 2, **characterized in that** the flow-through chamber (5) comprises a secondary ignition system (9).

4. Combustion turbine according to any of claims 1 to 3, **characterized in that** at least one injection nozzle (10) is provided in the flow-through chamber (5) for feeding a fuel.

5. Combustion turbine according to any of claims 1 to 4, **characterized in that** a guiding apparatus (11) is positioned between the flow-through chamber (5) and the turbine (4).

6. Combustion turbine according to any of claims 1 to 5, **characterized in that** flow-guiding elements (12) are positioned in the flow-through chamber (5) for creating a swirl.

7. Combustion turbine according to any of claims 1 to 6, **characterized in that** the flow-through chamber (5) has the form of a laval nozzle.

8. Combustion turbine according to any of claims 1 to 7, **characterized in that** the combustion turbine (1) comprises several combustion chambers (3), preferably four combustion chambers (3), and **in that** these combustion chambers (3) are connected to a joint flow-through chamber (5).

9. Method for operating a combustion turbine (1), where air is fed through inlet valves (2) to at least one combustion chamber (3), mixed with a fuel and burnt in the combustion chamber (3) which is not closed on the outlet side, and a turbine (4) is subsequently impinged with the process gas obtained in this manner, wherein the process gas flows through a flow-through chamber positioned axially downstream of the at least one combustion chamber (3) before impinging the turbine (4) therewith, **characterized in that** the process gas is fed from the at least one combustion chamber (3) to the flow-through chamber (5) via a flow plate (6) which is configured as a perforated plate or a swirl grid.

10. Method according to claim 9, **characterized in that** air is fed to the process gas in the flow-through chamber (5) intermittently.

11. Method according to any of claims 9 or 10, **characterized in that** a post-combustion of the process gas is performed in the flow-through chamber (5).

12. Method according to any of claims 9 to 11, **characterized in that** additional fuel is fed to the flow-through chamber (5) for a post-combustion.

13. Method according to any of claims 9 to 12, **characterized in that** the process gas is made into a swirl flow downstream of the at least one combustion chamber (3) before being fed to the turbine (4).

14. Drive system for a machine, such as vehicles, aircrafts, vessels, generators, construction machines and transmissions, having an internal combustion engine, **characterized in that** the internal combustion engine is a combustion turbine (1) according to any of claims 1 to 8.

## Revendications

1. Turbine à combustion avec combustion discontinue, comportant au moins une chambre de combustion (3) ayant des soupapes d'admission (2) et un allumeur (18), l'au moins une chambre de combustion (3) n'ayant pas de dispositifs d'obturation du côté de gaz d'échappement et par conséquent étant toujours ouverte du côté de gaz d'échappement, dans laquelle une turbine (4) est disposée en aval de l'au moins une chambre de combustion (3) qui peut être alimentée en un gaz de travail obtenu dans la chambre de combustion (3), dans laquelle une chambre de traversée (5) est disposée entre l'au moins une chambre de combustion (3) et la turbine (4) axialement en aval de l'au moins une chambre de combustion (3), **caractérisée en ce que** la chambre de traversée (5) est délimitée de l'au moins une chambre (3) de combustion par une plaque d'écoulement (6), la plaque d'écoulement (6) étant configurée comme plaque perforée ou comme grille à tourbillon.

2. Turbine à combustion selon la revendication 1, **caractérisée en ce que** la chambre de traversée (5) comporte des ouvertures de soupape (8) par lesquelles de l'air peut être amené de manière préférentielle.

3. Turbine à combustion selon la revendication 1 ou 2, **caractérisée en ce que** la chambre de traversée (5) comporte un système d'allumage secondaire (9).

4. Turbine à combustion selon l'une quelconque des revendications 1 à 3, **caractérisée en ce qu'**au moins une buse d'injection (10) est prévue dans la chambre de traversée (5) pour l'alimentation en un carburant.

5. Turbine à combustion selon l'une quelconque des revendications 1 à 4, **caractérisée en ce qu'**un dispositif de guidage (11) est positionné entre la chambre de traversée (5) et la turbine (4).

6. Turbine à combustion selon l'une quelconque des revendications 1 à 5, **caractérisée en ce que** des éléments de guidage de courant (12) sont disposés dans la chambre de traversée (5) pour la génération de tourbillon.

7. Turbine à combustion selon l'une quelconque des revendications 1 à 6, **caractérisée en ce que** la chambre de traversée (5) a la forme d'une tuyère de Laval.

8. Turbine à combustion selon l'une quelconque des revendications 1 à 7, **caractérisée en ce que** la turbine à combustion (1) comporte plusieurs chambres de combustion (3), de manière préférentielle quatre chambres de combustion (3), et **en ce que** ces chambres de combustion (3) sont reliées avec une chambre de traversée (5) commune.

9. Procédé d'actionnement d'une turbine à combustion (1), où de l'air est amené à au moins une chambre de combustion (3) par des soupapes d'admission (2), mélangé avec un carburant et brûlé dans la chambre de combustion (3) qui n'est pas fermée du côté de sortie, et ensuite une turbine (4) est alimentée en le gaz de travail obtenu de cette manière, dans lequel le gaz de travail passe par une chambre de traversée disposée axialement en aval de l'au moins une chambre de combustion (3) avant que la turbine (4) en soit alimentée, **caractérisé en ce que** le gaz de travail est amené de l'au moins une chambre de combustion (3) à travers une plaque d'écoulement (6) configurée comme plaque perforée ou comme grille à tourbillon à la chambre de traversée (5).

10. Procédé selon la revendication 9, **caractérisé en ce que** le gaz de travail est alimenté en air dans la chambre de traversée (5) de manière cadencée.

11. Procédé selon l'une quelconque des revendications 9 ou 10, **caractérisé en ce qu'**une postcombustion du gaz de travail est effectuée dans la chambre de traversée (5).

12. Procédé selon l'une quelconque des revendications 9 à 11, **caractérisé en ce que** la chambre de traversée (5) est alimenté en carburant additionnel pour une postcombustion.

13. Procédé selon l'une quelconque des revendications 9 à 12, **caractérisé en ce que** le gaz de travail est mis dans un écoulement tourbillonnaire en aval de l'au moins une chambre de combustion (3) avant que la turbine (4) en soit alimentée.

14. Système d'entraînement pour une machine, comme par exemple des véhicules, des avions, des navires, des générateurs, des engins et des transmissions, ayant un moteur à combustion interne, **caractérisé en ce que** le moteur à combustion interne est une turbine à combustion (1) selon l'une quelconque des revendications 1 à 8.
